Europäisches Patentamt

European Patent Office

Office européen des brevets

(19)

(11) Publication number: **0 120 147**
**A1**

(12) # EUROPEAN PATENT APPLICATION

(21) Application number: **83200451.9**

(22) Date of filing: **29.03.83**

(51) Int. Cl.³: **F 16 H 25/12**
**A 63 G 1/00**

(43) Date of publication of application:
**03.10.84 Bulletin 84/40**

(84) Designated Contracting States:
**BE DE FR GB IT**

(71) Applicant: **Ten Holder, Johannes Henricus Maria**
**56, Van Voorst tot Voorststraat**
**NL-5262 AR Vught(NL)**

(72) Inventor: **Ten Holder, Johannes Henricus Maria**
**56, Van Voorst tot Voorststraat**
**NL-5262 AR Vught(NL)**

(74) Representative: **'t Jong, Bastiaan Jacobus et al,**
**OCTROOIBUREAU ARNOLD & SIEDSMA Sweelinckplein**
**1**
**NL-2517 GK 's-Gravenhage(NL)**

(54) Translation-rotation converting mechanism.

(57) A device (1) for converting a translatory movement into a rotary movement or conversely comprising a groove body (2) having a groove (3) extending along a cylindrical plane with an axis of said body and being, in a developed projection, a single, zigzag-shaped line and a translation element (4) engaging the groove (3) and being guided with respect to the groove body to said axis wherein the groove (3) is provided in an inner surface of the groove body (2), and devices such as a pump (75), a motor (92) and a childrens roundabout (54), comprising said converting device.

FIG.9

EP 0 120 147 A1

1

# TRANSLATION-ROTATION CONVERTING MECHANISM.

The invention relates to a device for converting a translatory movement into a rotary movement or conversely, comprising a groove body having a groove extending along a cylindrical plane with respect to an axis of said body and being, in developed projection, a single-zigzag-shaped groove and comprising a groove-engaging translation element adapted to reciprocate with respect to the groove body and guided at least substantially parallel to the axis.

Such a device is known from French Patent Specification 486,161. This Patent Specification shows a piston engine in which the converting mechanism is used for converting the translatory movement of the piston into a rotary movement of a driving shaft.

The object of the present invention is to provide a device of the kind set forth in the preamble having universal usabilities. According to the invention this is achieved in that the groove is provided in an inner surface of the groove body. In this way a compact unit is obtained, the vulnerable groove of which is protected against soiling and damage. Moreover, the translation element may extend concentrically with the groove body, which is very advantageous for the power transmission, since in this way undesirable reaction torques are avoided.

When in accordance with a further feature of the invention the groove angle is self-braking, the device may be used as an escapement. In this case the groove element is rotatably loaded and rotation can only occur when the translation element is reciprocated.

The invention furthermore relates to a storage rack comprising vertical supporting means with chains guided by sprockets for supporting storage elements in superposition so as to be downwardly movable to a delivery station and a horizontally reciprocatory stripping member in the delivery station for stripping the storage elements from the supporting elements, said storage rack being characterized by a device for converting the translation movement into a rotation movement in accordance with the invention, in which the angle of the groove is self-braking, whilst the groove element is rotatably journalled and coupled with at least one sprocket and the translation element is coupled with the stripping member. For this storage rack only one driven member, that is to say, the stripping member is required for controlling the whole rack.

The device embodying the invention can be used not only for converting a translation into a rotary movement but also for converting a rotary movement into a translatory movement. Such an application of the invention to a diaphragm pump will be described more fully hereinafter.

It is not necessary for the groove element to carry out a rotary movement. As an alternative, the groove element may be arranged so as to be immovable and the translation element may be caused to perform a rotary movement. Moreover the translation element may be arranged so as to be immovable whereas the groove body performs both a translatory and a rotary movement. An example of an application of the invention in which the groove body is immovable is further detailed in the description of the Figures.

The invention will now be described more fully with reference to the accompanying drawings.

Fig. 1 is a cross-sectional view of a device embodying the invention, in which the rotation element is formed by a gear wheel.

Fig. 2 is a sectional view taken on the line II-II in Fig. 1.

Fig. 3 is a sectional view taken on the line III-III in Fig. 1.

Fig. 4 schematically illustrates an arrangement in which storage racks embodying the invention are employed.

Fig. 5 is a fragmentary, perspective view of a storage rack embodying the invention.

Fig. 6 is a fragmentary, perspective view of a "childrens roundabout" in which the translation-rotation mechanism is used in accordance with the invention.

Fig. 7 is a fragmentary, perspective view of the device embodying the invention for the "childrens roundabout" shown in Fig. 6.

Fig. 8 is a fragmentary, perspective and schematic view of a diaphragm pump.

Fig. 9 is a fragmentary, perspective and schematic view of a reciprocatory piston engine.

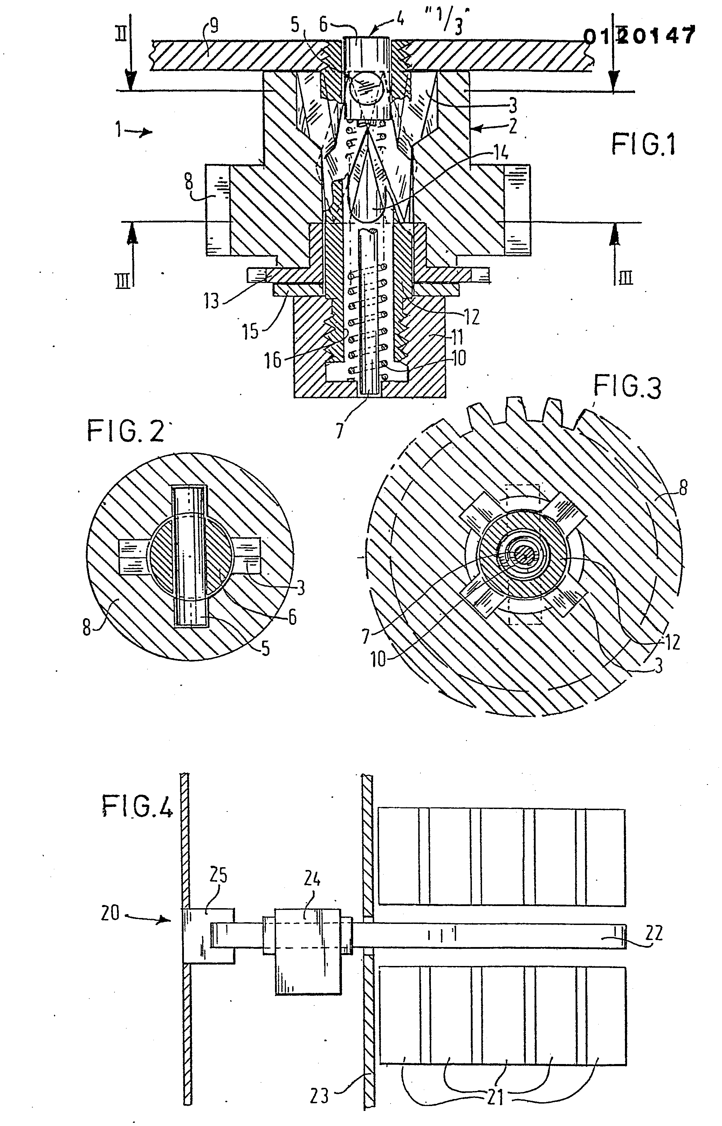

The device 1 shown in Figs. 1 to 3 for converting a translatory movement into a rotary movement comprises a groove body rotatably journalled on a guide mounted on a frame 9 and a translation element 4 coaxial with the former and journalled in the guide 12 so as to be movable in a longitudinal direction. The guide 12 is mounted with the aid of screwthread in the frame 9. The groove body is locked in an axial direction by means of a ring 15 and a locking nut 11 being in contact with said ring and being mounted by means of. screwthread on the guide 12. The groove body 2 comprises in this embodiment a gear wheel 8. In an inner surface of the groove body 2 is formed a groove 3. According to the invention this groove 3 extends, in a developed projection, along a single zigzag line. It will be particularly apparent from Figs. 2 and 3 that the groove 3 has four complete zigzag strokes so that each part of the groove is diametrically

4
0120147

opposite another part of the groove. The translation element 4 is arranged in an axial bore 16 of the guide 12. This element comprises a head 6 and a shaft 7. The head 6 has a transverse hole into which a pin 5 is inserted. The pin 5 extends through diametrically opposite elongate slots 14 in the guide 12. Since the pin 5 is engaged in the elongate slots 14, the translation element 4 is prevented from rotating. The pin 5 extends beyond the outer circumference of the guide 12 and engages by both its ends the groove 3 at two diametrically opposite places. Around the shaft 7 of the translation element 4 is arranged a helical compression spring 10, one end of which is in contact with the head 6 and the other end of which with the locking nut 11. The spring 14 urges the translation element into the position shown.

When the translation element 4 is pushed downwards, viewed in Fig. 1, the gear wheel 8 turns through 45° owing to the engagement of the pin 5 in the groove 3, when the translation element 4 has reached its lowermost position. At the return movement upwards caused, for example, by the spring 10 the gear wheel 8 is again turned through 45° since the pin 5 is engaged in the groove 3. In the embodiment shown the zigzag groove 3 is symmetrical. It is thus not ensured that at every stroke of the translation element 4 the groove body 2 turns in one and the same direction. If desired, this can be achieved in known manner by biassing the groove body 2 in the desired rotation direction or by a suitable asymmetrical design of the groove 3.

Instead of being caused by the compression spring 10, the return stroke of the translation element 4 may be driven positively both in the onward and the backward stroke.

The device embodying the invention for converting a translatory movement into a rotary movement can be universally used. The embodiment shown in Fig. 1 to 3 is intended for use in o storage rack of the kind shown in Fig. 5. For this reason the groove body 2 is provided with a gear wheel 8, with which a sprocket 13 is coupled.

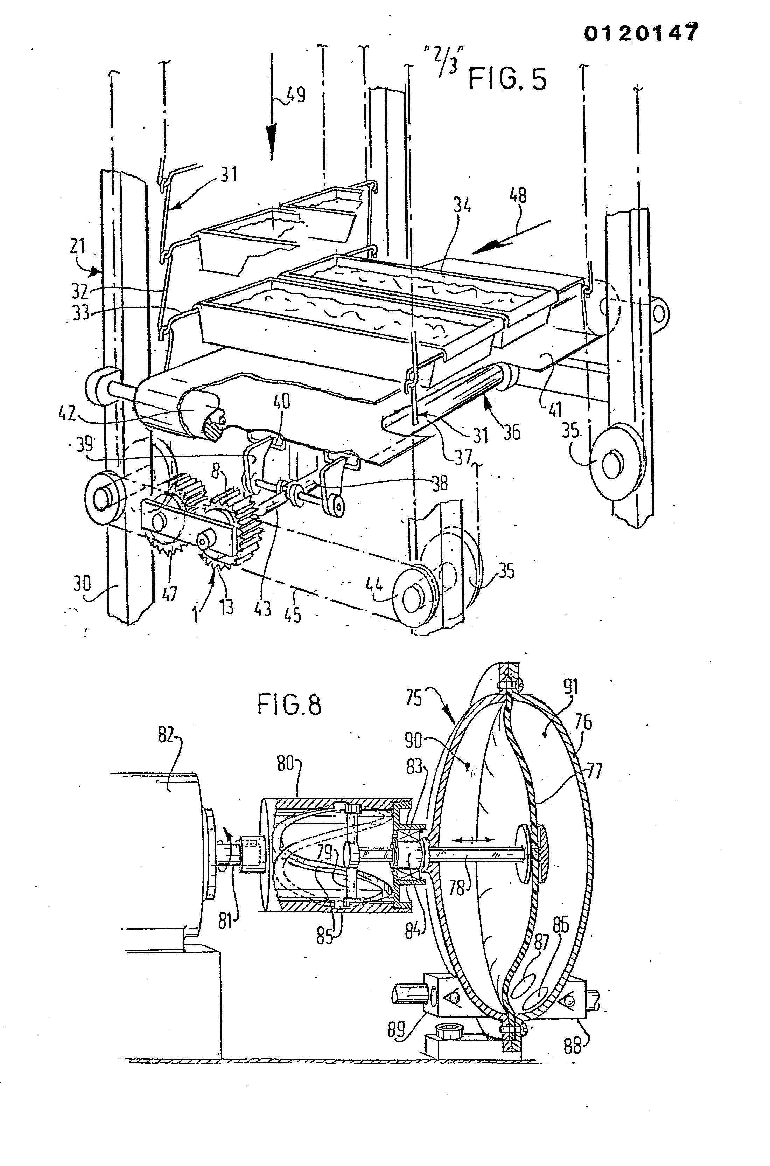

The storage rack 21 of Fig. 5 is intended for use in a device 20 for dispensing a heating industrially prepared foodstuffs (Fig. 4). The prepared food packages are stored in storage racks 21 arranged in a cooled room, only the wall 23 of which is shown. When a user wants to receive a given food package he can cause the storage rack 21 to deposit the desired food package on the conveyor belt 22, for example, by means of a coin and/or by introducing a given code near the window 25. The conveyor belt 22 passes the food package through a magnetron oven 24, in which it is heated, to the window 25, where the user will receive the same.

Each storage rack 21 comprises four stands 30 in which sprockets 35 are journalled, which guide vertical chains 31. In the embodiment shown the chains 31 are formed by a plurality of links 32 of bent suitable metal wire, each comprising a supporting rod 33 extending between a front and a rear stand 30. Instead of using chains formed by such links, conventional chains may be employed, between which suitable supporting elements are arranged. On the supporting rods of two opposite links are supported storage elements formed by food packages 34. In a single storage rack 21 can thus be kept a plurality of food packages 34 in superposition. The storage rack 21 also comprises a stripping device 36 by which the lowermost food package or one of the lower food packages can be moved out of the rack 21 onto the conveyor belt 22 schematically shown in Fig. 4. The stripping device 36 comprises a stripping belt 41, which is journalled by means of rollers 42 on the posts 30 of the rack 21. The stripping belt 41 can be reciprocated by means of a pneumatic cylinder 37. The piston rod 38 of the pneumatic cylinder 37 carries catches 39 which can engage gripping elements 40 of the stripping belt 41. At the return stroke of the piston rod 38 out of the position shown in Fig. 5 the food packages 34 lying on the stripping belt 41 are moved in the direction of the arrow 48. In the embodiment shown the return stroke of the piston rod 38 is performed in two phases, in each of which one food package 34 is dispensed. When the two food packages 34 have been delivered by the stripping belt 41, the piston rod 38 will perform an outgoing stroke. At the end of the outgoing stroke a pushing pin 43 connected with the end of the piston rod 38 comes into contact with the translation element of the device 1. The gear wheel 8 of the groove body then rotates during the last part of the outgoing stroke of the piston rod 38 and during the first part of the inward stroke thereof through 90°. Through the sprocket 13, the chain 45 and the sprocket 46 the groove body is coupled with a sprocket 35 of the vertical chain on one side of the rack. By means of a gear wheel 47 being in mesh with the gear wheel 8 a corresponding movement is transferred to the chain 31 on the other side of the rack. Therefore, owing to the movement of the piston rod 38 the chains will move in the direction of the arrow 49 so that the next-following food packages are positioned on the stripping belt 41. At the further return stroke of the piston rod 38 food packages 34 are again dispensed in the manner described above.

The storage rack 21 of the invention thus comprises only one driving member i.e. the pneumatic cylinder/piston 36 both for moving vertically downwards the food packages 34 and the delivery thereof from the rack. The angle of the groove in the device 1 is in this application self-braking so that the vertical chains 31 can only move under the action of the movement of the pushing pin 43.

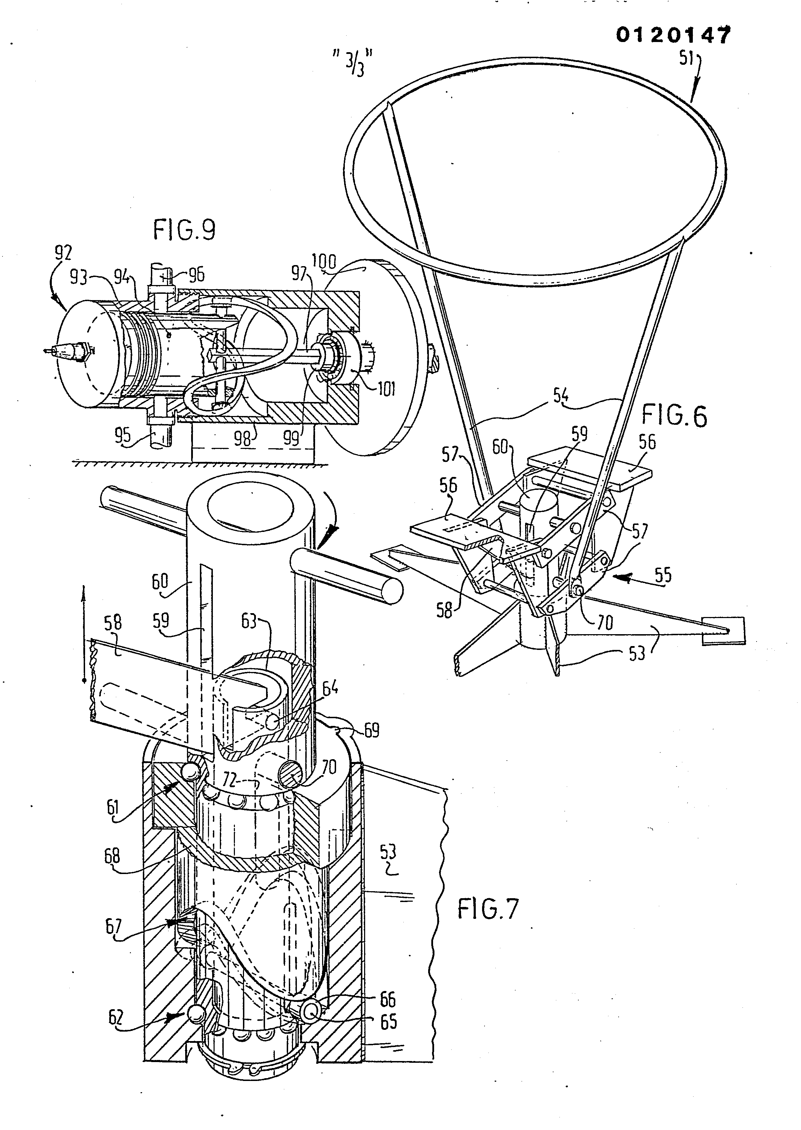

To illustrate the versatile usability of the device embodying the invention for converting a translatory movement into a rotary movement Fig. 6 shows a "childrens roundabout". The childrens roundabout 51 comprises a support 53 on which a cage 54 is rotatably supported. A driving mechanism 55 rotates together with the cage 54. The driving mechanism 55 comprises two pedals 56 which are supported by means of four parallel arms 57. The pedals 56 are guided by the arms 57 in such a way, that the pedals 56 can move vertically back and forth and opposite to one another. That is to say, when one pedal 56 moves downward, the other pedal 56 moves upward and vice versa. With one of the pedals 56 a driving arm 58 is connected. This driving arm 58 therefore can also move vertically back and forth. The driving arm 58 extends through a slip 59 in the shaft 60 and engages the converting mechanism according to the invention, with what the translatory movement of the pedals 56 is converted into a rotating movement of the cage 54.

Fig. 7 shows the converting mechanism according to the invention as embodied in this childrens roundabout. The shaft 60 is rotatably supported by bearings 61, 62 with respect to the support 53. The shaft 60 is hollow and in it a bar 63 is received. The driving arm 58, extending through the slid 59 in the shaft 60 engages a pin 64 fixed to the bar 63. Therefore the vertical translatory movement of the driving arm 58 is transferred to the bar 63. At the lower end of the bar 63 a transverse pin 65 is fixed. This pin 65 has to its outer ends fixed rollers 66. These rollers 66 engage in a groove 67 of the groove body, forming part of the support 53. The bar 63 is restrained from rotatary movement relative to the shaft 60, because of the fact that the pin 65 extends through vertical slids 66 in the wall of the shaft 60. Furthermore a transverse bar 70, fixed to the shaft 60 extends through vertical slids 72 in the bar 63.

The groove body is formed of two parts. The first part defines the lower surface of the groove 67, whereas a bushing 68 positioned in the first part defines the upper surface of the groove 67. The bushing 68 is restricted from movement relative to the support 53, by means of a cam lock 69.

The childrens roundabout as described in connection with Figs. 6 and 7, works the following way. A child is put in the cage 54, with each of its feet at one of the pedals 56. By pushing at one of the pedals, a vertical force is transmitted to the bar 63. Because of the engagement between the rollers 66 and the walls of the groove 67, a reaction force causes the bar 63 to rotate with respect to the support 53. The bar 63 is rotatably fixed to the shaft 60 and therefore the shaft, together with the cage 54 and the driving mechanism 55 will rotate with respect to the support 53. The child can turn itself round by moving its feet oppositely up and down. In this way fun for the child is advantageously combined with healthy exercice.

Fig. 8 shows a diaphragm pump in which a device embodying the invention is used for the conversion of a rotary movement caused by an electric motor 82 into a translation movement of the diaphragm 77. The pump 75 comprises a pump housing 76 in which a diaphragm 77 is arranged. The diaphragm 77 is connected with a rod 78. The other end of the rod 78 is provided with a pin 79 engaging the groove 85 of the groove body 80. This groove body is coupled with the shaft 81 of the electric motor 82. At the end remote from the motor 82 the groove body 80 is journalled by means of a bearing 83 on a stub shaft 84 of the pump housing 76. The stub shaft 84 comprises a guide sleeve accommodating the rod 78, which has six sides as is shown in the drawing, so as to be slidable but not rotatable. Upon a rotation of the motor shaft 81 and hence of the groove body 80 the ends of the pin 79 lying in opposite parts of the groove 85 are compelled to perform a reciprocatory movement. This reciprocatory movement is transferred by the pin 78 to the diaphragm 77. The volume of the pump chambers 90 and 91 thus alternately increases and decreases. The pump chamber 91 has an inlet 86 and an outlet 87. These communicate with a valve block 88 comprising non-return valves. In a corresponding manner a valve block 89 is associated with the pump chamber 90.

The reciprocatory piston motor 92 shown in Fig. 9 also comprises a translation-rotation converting mechanism embodying the invention, in which the groove is provided in an inner surface of the groove body. Also in this case a relative rotation and a relative translation take place between the groove element and the translation element. These relative movements are achieved in that the groove body is immovable with respect to its surroundings and the translation body performs both a translatory and a rotary movement with respect to the surroundings.

The motor 92 comprises a cylinder 93 in which a piston 94 is slidable. In known manner and herein shown only very schematically the cylinder is provided with an inlet 95 and an outlet 96. The piston 94 can move to and fro in the cylinder 93. The piston 94 is connected with a rod 97, which is slidably but not rotatably journalled in the output shaft 99 of the motor. The output shaft 99 is journalled by means of a bearing 101 in the housing of the motor. With the output shaft 99 is connected a flywheel 100. The motor housing is formed by the groove body 98 having a groove 103 in its inner surface. This groove 103 is engaged in the manner described above by pins 102 connected with the translation element formed by the rod 97 and the piston 94.

By causing the piston 94 to perform not only the conventional reciprocatory movement but also a rotary movement, a very compact motor structure in conjunction with the translation-rotation converting element in accordance with the invention, said structure having only two moving parts i.e. the translation element comprising the piston and the output shaft.

From the embodiments described it will be obvious that the device according to the invention can be universally used. It may serve to convert a translation movement into a rotation movement or conversely. Moreover, dependent on the construction to be achieved the groove body and the translation element may perform different movements with respect to the surroundings. This is to say the groove element may stand still with respect to the surroundings, it may rotate of perform a translatory movement and this applies also to the translation element. Since in accordance with the invention the groove is provided in an inner surface of the groove element, the advantage of a compact, screened construction is obtained, in which unfavourable bending forces will not occur.

1

CLAIMS

1. A device for converting a translatory movement into a rotary movement or conversely comprising a groove body having a groove extending along a cylindrical plane with an axis of said body and being, in a developed projection, a single, zigzag-shaped line and a translation element engaging the groove and being guided with respect to the groove body in a movement reciprocating at least substantially parallel to said axis characterized in that the groove is provided in an inner surface of the groove body.

2. A device as claimed in Claim 1 characterized in that the angle of the groove is self-braking.

3. A storage rack comprising vertical supporting means including chains guided by sprockets for supporting storage elements in superposition so as to be moveable downwards towards a delivery station and a horizontal reciprocatory stripping member in the delivery station for stripping the storage elements from the supporting elements characterized by a device as claimed in Claim 2, the groove element of which is rotatably journalled and coupled with at least one sprocket and the translation element is coupled

2

0120147

with the stripping member.

4. A reciprocatory piston motor comprising a frame, a cylinder connected with said frame and a piston slidably arranged in said cylinder characterized in that the piston is accommodated in the cylinder so as to be rotatable about its longitudinal axis, and is connected with a translation element of a device as claimed in Claim 1, the groove body of which is rigidly secured to said frame.

5. A childrens roundabout characterized by a support, a cage mounted to the support rotatable around a vertical axis, driving means connected to the cage and engaging the support for rotating said cage with respect to said support said driving means comprising a device according to Claim 1, the translation element of which being coupled with at least one pedal vertically movable connected with the cage and the groove body being connected with the support.

FIG.1

"1/3"    0120147

FIG.2

FIG.3

FIG.4

"2/3" FIG.5

FIG.8

0120147

FIG.9

FIG.6

FIG.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A- 514 067 (FORSBERG K.A.G.) * Whole document * | 1,4 | F 16 H 25/12<br>A 63 G 1/00 |
| A | US-A-2 548 411 (VACHE H.F.) * Whole document * | 1,2 | |
| A | DE-B-2 114 962 (GES) * Whole document * | 3 | |
| A | US-A-2 548 228 (McCRAY D.C.) * Whole document * | 5 | |

TECHNICAL FIELDS
SEARCHED (Int. Cl. ³)

F 16 H
A 63 G
B 65 G

The present search report has been drawn up for all claims

| Place of search | Date of completion of the search | Examiner |
|---|---|---|
| THE HAGUE | 01-12-1983 | HARRISON M.C. |